# EUROPÄISCHE PATENTANMELDUNG

(11) **EP 1 605 570 A2**
(43) Veröffentlichungstag der Anmeldung: **14.12.2005**
(21) Anmeldenummer: 05010376.1
(22) Anmeldetag: 12.05.2005
(51) Int. Cl.: H02J 1/08

(54) **Speisung einer Spannungsversorgungseinrichtung eines zweiten Busssystems, welches an ein erstes Bussystem angeschlossen ist**

(30) Priorität: 11.06.2004 DE 102004028498
(71) Anmelder: ABB PATENT GmbH, 68526 Ladenburg (DE)
(72) Erfinder: Zapp, Robert, Dipl.-Ing., 58579 Schalksmühle (DE)
(74) Vertreter: Miller, Toivo

(57) **Zusammenfassung**

Es wird eine Speisung einer Spannungsversorgungseinrichtung (3) eines zweiten Bussystems (1) vorgeschlagen, welches an ein erstes Bussystem (9) angeschlossen ist, wobei zur Kommunikation zwischen beiden Bussystemen (1, 9) eine Umwandlung der zu übertragenden Daten in einer Übergabeschnittstelle (5) erfolgt. Die Spannungsversorgung der Spannungsversorgungseinrichtung (3) des zweiten Bussystems (1) erfolgt über die Leitungen des ersten Bussystems (9), wozu zwischen erstem Bussystem (9) und Übergabeschnittstelle (5) ein Spannungs/Daten-Trennbaustein (7) angeordnet ist, der die Auskopplung der Spannung und die Umwandlung in eine zur Versorgung des zweiten Bussystems (1) geeigneten Spannung bewerkstelligt.

## Beschreibung

Die Erfindung bezieht sich auf eine Speisung einer Spannungsversorgungseinrichtung eines zweiten Bussystems, welches an ein erstes Bussystem angeschlossen ist, wobei zur Kommunikation zwischen beiden Bussystemen eine Umwandlung der zu übertragenden Daten in einer Übergabeschnittstelle erfolgt. Die Erfindung kann insbesondere bei Kopplung eines Ethernet-Netzwerks unter Nutzung von "Power over Ethernet" mit einem EIB-Netzwerk verwendet werden.

Die Technologie von "Power over Ethernet" erlaubt es, kleinere Netzwerkgeräte ohne eine externe Stromquelle zu betreiben, wobei diese Geräte direkt über ein "Twisted-Pair-Kabel mit Energie (48 V Gleichspannung) versorgt werden. Das "Power over Ethernet"-Verfahren macht sich die Tatsache zu nutze, dass beispielsweise von vier vorhandenen Adernpaaren lediglich zwei zur Datenübertragung benutzt werden. Die maximale Speiseleistung beträgt etwa 12 W. Die Anpassung an die gewünschte Spannung erfolgt mit Hilfe eines DC/DC-Converters.

Bei Kopplung eines Ethernet-Netzwerks mit einem EIB-Netzwerk ist üblicherweise eine Übergabeschnittstelle vorzusehen, welche die erforderliche Wandlung der zu übertragenden Daten durchführt. Üblicherweise erfolgt die Leistungsversorgung dieser Übergabeschnittstelle über einen Anschluss an das 230-V-Netz. In der Übergabeschnittstelle sind aufwendige Trennungen und Isolierungen zwischen der Netz- und Busspannung erforderlich. Hierdurch kann eine bestimmte Baugröße bei der Übergabeschnittstelle nicht unterschritten werden. Ferner ist zur Leistungsversorgung des EIB-Netzwerks eine Spannungsversorgungseinrichtung notwendig, welche ebenfalls an das 230-Volt-Netz angeschlossen ist und welche eine zur Spannungsversorgung des EIB-Netzes geeignete Spannung zur Verfügung stellt.

Der Erfindung liegt die Aufgabe zugrunde, eine vorteilhafte, d. h. kostengünstige Speisung einer Spannungsversorgungseinrichtung eines zweiten Bussystems anzugeben, welches an ein erstes Bussystem angeschlossen ist.

Diese Aufgabe wird in Verbindung mit den Merkmalen des Oberbegriffes erfindungsgemäß dadurch gelöst, dass die Spannungsversorgung der Spannungsversorgungseinrichtung des zweiten Bussystems über die Leitungen des ersten Bussystems erfolgt, wozu zwischen erstem Bussystem und Übergabeschnittstelle ein Spannungs/Daten-Trennbaustein angeordnet ist, der die Auskopplung der Spannung und die Umwandlung in eine zur Versorgung des zweiten Bussystems geeignete Spannung bewerkstelligt.

Die mit der Erfindung erzielbaren Vorteile bestehen insbesondere darin, dass für das zweite Bussystem kein eigener 230-V-Netzanschluss nötig ist, d. h. es entfällt das sonst erforderliche Netzteil mit dem Anschluss an eine Netzleitung. Folglich entfallen auch jegliche aufwendige Trennungen und Isolierungen zwischen Netz- und Busspannung innerhalb der Spannungsversorgungseinrichtung. Insgesamt kann die Spannungsversorgungseinrichtung sehr klein ausgeführt werden.

Weitere Vorteile sind aus der nachstehenden Beschreibung ersichtlich.

Eine vorteilhafte Ausgestaltung der Erfindung ist im Unteranspruch gekennzeichnet.

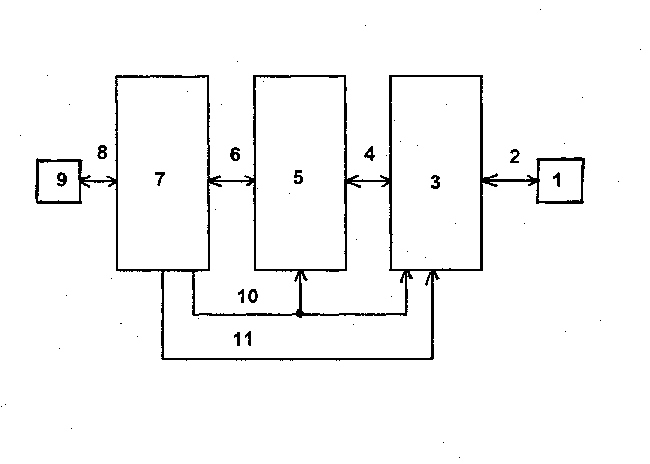

Die Erfindung wird nachstehend anhand des in der Zeichnung dargestellten Ausführungsbeispieles erläutert. In der Fig. ist ein zweites (untergeordnetes) Bussystem 1 der Gebäudesystemtechnik, insbesondere ein EIB-Netzwerk (Europäischer Installations Bus) zu erkennen, das über eine Busleitung 2, insbesondere EIB-Linie, an eine Spannungsversorgungseinrichtung 3 angeschlossen ist. Die auf der Busleitung 2 übertragenen Daten 4, insbesondere EIB-Daten, werden an eine mit der Spannungsversorgungseinrichtung 3 verbundene Übergabeschnittstelle 5 oder Rechenwerk weitergeleitet. Bei der Spannungsversorgungseinrichtung 3 handelt es sich insbesondere um ein EIB-Netzteil zur Versorgung der EIB-Linie und Einkopplung der Daten.

Die Übergabeschnittstelle 5 (Gateway oder IP-Server, Information Processor) führt eine Umwandlung der Daten 4 in für ein erstes (übergeordnetes) Bussystem 9, insbesondere Ethernet-Netzwerk, geeignete Daten 6, insbesondere Ethernet-Daten, durch und führt diese Daten 6 einem Spannungs/Daten-Trennbaustein 7 zu, welcher andererseits über eine Busleitung 8, insbesondere Ethernetleitung, an das bereits erwähnte übergeordnete Bussystem 9 angeschlossen ist. Im Spannungs/Daten-Trennbaustein 7 erfolgt allgemein die Trennung von Daten und Spannung. Beim übergeordneten Bussystem 9 handelt es sich um ein Bussystem "Power over Ethernet" PoE, mit dem beispielsweise kleinere Geräte ohne externe Stromquelle betrieben werden können. Wie eingangs erwähnt, stehen für die Anwendung bis zu 12 W zur Verfügung. Nicht genutzte Adern der Ethernet-Leitung übernehmen dabei die Gleichstromversorgung.

Selbstverständlich ist es umgekehrt auch möglich, Daten vom übergeordneten Bussystem 9 über den Spannungs/Daten-Trennbaustein 7, die Übergabeschnittstelle 5 und die Spannungsversorgungseinrichtung 3 an das untergeordnete Bussystem 1 weiterzuleiten, wobei die Übergabeschnittstelle 5 die erforderliche Datenumwandlung durchführt. Die EIB-Daten werden der Spannungsversorgungseinrichtung (EIB-Netzteil) zugeführt, indem sie mit der Busspannung in bekannter Art und Weise verbunden werden.

Die Spannungsversorgung für das untergeordnete Bussystem 1 erfolgt mit Hilfe des übergeordneten Bussystems 9 und unter Einsatz des Spannungs/Daten-Trennbausteins 7, welcher die über die Busleitung 8 zur Verfügung gestellte Spannung in geeignete, unterschiedliche Versorgungsspannungen 10 und 11 zur Spannungsversorgung der Übergabeschnittstelle 5 und der Spannungsversorgungseinrichtung 3 umwandelt - mittels DC/C-Converter - und sie diesen Baukomponenten zuführt.

### Bezugszeichenliste:

- 1: Zweites (untergeordnetes) Bussystem, insbesondere EIB-Netzwerk
- 2: Busleitung, insbesondere EIB-Linie
- 3: Spannungsversorgungseinrichtung, insbesondere EIB-Netzteil
- 4: Daten, insbesondere EIB-Daten
- 5: Übergabeschnittstelle oder Rechenwerk
- 6: Daten, insbesondere Ethernet-Daten
- 7: Spannungs/Daten-Trennbaustein
- 8: Busleitung, insbesondere Ethernetleitung
- 9: Erstes (übergeordnetes) Bussystem, insbesondere Ethernet-Netzwerk
- 10: Versorgungsspannung
- 11: Versorgungsspannung

## Patentansprüche

1. Speisung einer Spannungsversorgungseinrichtung (3) eines zweiten Bussystems (1), welches an ein erstes Bussystem (9) angeschlossen ist, wobei zur Kommunikation zwischen beiden Bussystemen (1, 9) eine Umwandlung der zu übertragenden Daten in einer Übergabeschnittstelle (5) erfolgt, **dadurch gekennzeichnet, dass** die Spannungsversorgung der Spannungsversorgungseinrichtung (3) des zweiten Bussystems (1) über die Leitungen des ersten Bussystems (9) erfolgt, wozu zwischen erstem Bussystem (9) und Übergabeschnittstelle (5) ein Spannungs/Daten-Trennbaustein (7) angeordnet ist, der die Auskopplung der Spannung und die Umwandlung in eine zur Versorgung des zweiten Bussystems (1) geeignete Spannung bewerkstelligt.

2. Speisung nach Anspruch 1, **dadurch gekennzeichnet, dass** die Spannungsversorgung der Übergabeschnittstelle (5) ebenfalls über die Leitung des ersten Bussystems (9) und den Spannungs/Daten-Trennbaustein (7) erfolgt, wobei letzterer die Auskopplung der Spannung und die Umwandlung in eine zur Versorgung der Übergabeschnittstelle (5) geeignete Spannung bewerkstelligt.
